Europäisches Patentamt

European Patent Office

Office européen des brevets

(11) Publication number: **0 090 052**
**B1**

# EUROPEAN PATENT SPECIFICATION

(45) Date of publication of patent specification: 24.06.87

(51) Int. Cl.⁴: **G 11 B 5/716**

(21) Application number: **82902834.9**

(22) Date of filing: **27.09.82**

(86) International application number:
**PCT/JP82/00389**

(87) International publication number:
**WO 83/01144 31.03.83 Gazette 83/08**

(54) **MAGNETIC RECORDING MEDIUM.**

(30) Priority: **28.09.81 JP 153298/81**

(43) Date of publication of application:
**05.10.83 Bulletin 83/40**

(45) Publication of the grant of the patent:
**24.06.87 Bulletin 87/26**

(84) Designated Contracting States:
**FR**

(56) References cited:
**DE-A-2 309 159**
**DE-A-2 615 961**
**DE-A-2 647 941**
**JP-A-54 021 304**
**JP-A-55 108 928**

(73) Proprietor: **SONY CORPORATION**
**7-35 Kitashinagawa 6-Chome Shinagawa-ku**
**Tokyo 141 (JP)**

(72) Inventor: **KUBOTA, Isao Sony Corporation**
**7-35, Kitashinagawa 6-chome Shinagawa-ku**
**Tokyo 141 (JP)**

(74) Representative: **Thomas, Christopher Hugo**
**et al**
**D Young & Co 10 Staple Inn**
**London WC1V 7RD (GB)**

EP 0 090 052 B1

Courier Press, Leamington Spa, England.

## Description

This invention relates to magnetic recording media.

A prior art magnetic recording medium, for example, a magnetic tape with magnetic powder, such as, gamma-$Fe_2O_3$ coated with Co on the surface thereof (the specific surface area of the magnetic powder being about 20 m²/g) has a large coercive force and residual magnetic flux density, achieves a high reproduced output over the whole frequency band range, but has the defect that the bias noise is substantial.

We have found that, if a magnetic powder having a large specific surface area is distributed near the surface of the magnetic layer of a magnetic recording medium, the bias noise is reduced, and if an metal magnetic powder having a small specific surface area is distributed inwardly in the magnetic layer (that is, the region below the middle of the magnetic layer in the thickness direction), the reproduced output is increased over the whole frequency band. Particularly we have found that, if Co compound-deposition type iron oxide magnetic powder or Co and Fe compound-deposition type iron oxide magnetic powder with a large specific surface area is distributed in the upper layer and Co-deposition type iron oxide magnetic powder with a small specific surface area is distributed in the under layer, the best result could be obtained.

According to the present invention, therefore, there is provided a magnetic recording medium having a non-magnetic base, a first magnetic layer formed on said base and a second magnetic layer formed on said first magnetic layer, characterised in that said first magnetic layer is formed by coating binder containing a Co compound-deposition type iron oxide magnetic powder or a Co and Fe compound-deposition type iron oxide magnetic powder the specific surface area of which powder measured according to a BET adsorption method is in a range from 18 to 25 m²/g, and the coercive force $H_{c1}$ of which layer is in a range from 31831 to 55704 A/m (400 to 700 oersteds), and the residual magnetic flux density Br of which layer is in a range from 0.16 to 0.2 telsa (1600 to 2000 gauss), and in that said second magnetic layer is formed by coating binder containing a Co compound-deposition type iron oxide magnetic powder or a Co and Fe compound-deposition type iron oxide magnetic powder the specific surface area of which powder measured according to the BET absorption method is 28 m²/g or above, and the coercive force $H_{c2}$ of which layer is in a range from 43768 to 71620 A/m (550 to 900 oersteds).

The invention will now be described by way of example with reference to the accompanying drawings, throughout which like parts are referred to by like references, and in which:

Figure 1 is an enlarged cross-sectional view of a prior art magnetic recording medium;

Figure 2 is an enlarged cross-sectional view of an embodiment of magnetic recording medium according to the present invention;

Figure 3 is a table for indicating characteristics of respective examples of a single-layer magnetic recording medium; and

Figure 4 is a table for indicating characteristics of respective embodiments of double-layer magnetic recording medium according to the present invention.

An iron oxide magnetic powder of Co compound-deposition type used in embodiments of the invention can be obtained, by, for example, the following method.

An acicular iron oxide magnetic powder, for example, gamma-$Fe_2O_3$ or an iron oxide magnetic powder in the oxidized state between gamma-$Fe_2O_3$ and $Fe_3O_4$, is mixed with a water soluble cobalt salt or metal cobalt particles in a strong alkali aqueous solution, heated, and then stirred thereby to adsorb cobalt hydroxide on individual particles of the iron oxide powder. The particles are filtered from the solution and rinsed with water, dried, and subjected to heat treatment in air or an $N_2$ gaseous atmosphere thereby to produce an iron oxide magnetic powder in which cobalt compound (for example, cobalt oxide) is deposited on the surface of the acicular iron oxide magnetic powder. The heat treatment after the particles have been filtered from the solution is performed at a relatively low temperature, for example, 80°C to 200°C.

The specific surface area and the coercive force $H_c$ of Co compound-deposition type iron oxide magnetic powder formed by this method can be controlled by selecting the specific surface area and the axial ratio of the acicular iron oxide magnetic powder used as a starting material, the amount of Co (compound) to be deposited and the temperature of the heat treatment.

The method of making such Co-deposition type iron oxide magnetic powder is disclosed in the specifications of, for example, Japanese laid-open patent applications No. 13997/1979 and No. 158697/1979 or No. 150208/1980. Also, it is possible to use an iron oxide magnetic powder in which not only the Co compound, but also Co and Fe compounds are deposited on the surface of the acicular iron oxide particles.

In this case, an acicular iron oxide is heated and stirred together with cobalt salt and iron salt in a strong alkali aqueous solution. Then, after the compound of iron and cobalt has been deposited on the surface of acicular iron oxide particles, the particles are filtered from the solution, rinsed with water, and then subjected to the same heat treatment as described above to produce iron oxide magnetic powder. An example of such manufacturing method is disclosed in the specification of, for example, Japanese laid-open patent application No. 60031/1980.

These methods of making magnetic powder are merely examples of methods for making Co compound-deposition type iron oxide magnetic powder or Co and Fe compound-deposition type iron oxide magnetic powder used in embodiments of the present invention, and other methods can be used.

Embodiments of magnetic recording media according to the invention will now be described in detail with reference to examples employing Co-deposition type gamma-$Fe_2O_3$ magnetic powder as a magnetic powder. The specific surface areas of the magnetic powder quoted are measured by the BET adsorption method.

Examples

1. Co-deposition type gamma-$Fe_2O_3$
   magnetic powder having specific
   surface area of 20 m²/g and coercive
   force of 33423 A/m (420 Oe) ............ 400 parts by weight
   Thermoplastic polyurethane resin
   (Estan 570 (trade name), manufactured
   by B. F. Goodrich Corp.) ............ 50 parts by weight
   Vinyl-chloride-vinyl acetate copolymer
   (Vagh (trade name); manufactured
   by UCC Corp.) ............ 50 parts by weight
   Lecithin ............ 4 parts by weight
   Methyl ethyl ketone ............ 700 parts by weight
   Cyclohexanone ............ 50 parts by weight

These components were mixed together and dispersed using a ball mill for twenty-four hours. After that, 20 parts by weight of polyisocyanate (Desmodur (Registered Trade Mark) L-75, manufactured by Bayer AG) was added thereto and then dispersed by high speed shear mixing for two hours thereby to produce magnetic paint. This is specified as magnetic paint A.

2. Co-deposition type gamma-$Fe_2O_3$
   magnetic powder having specific
   surface area of 20 m²/g and coercive
   force of 33423 A/m (420 Oe) ............ 400 parts by weight
   Thermoplastic polyurethane resin ............ 33.3 parts by weight
   Vinyl-chloride-vinyl acetate copolymer ............ 33.3 parts by weight
   Lecithin ............ 4 parts by weight
   Methyl ethyl ketone ............ 650 parts by weight
   Cyclohexanone ............ 50 parts by weight

These components were mixed together and then treated by the same process as in the magnetic paint A of Example 1 thereby to produce magnetic paint. This is specified as magnetic paint B.

3. Co-deposition type gamma-$Fe_2O_3$
   magnetic powder having specific
   surface area of 20 m²/g and coercive
   force of 33423 A/m (420 Oe) ............ 400 parts by weight
   Thermoplastic polyurethane resin ............ 25 parts by weight
   Vinyl-chloride-vinyl acetate copolymer ............ 25 parts by weight
   Lecithin ............ 4 parts by weight
   Methyl ethyl ketone ............ 625 parts by weight
   Cyclohexanone ............ 50 parts by weight

These components were mixed together and then treated by the same process as in the magnetic paint A of Example 1 thereby to produce magnetic paint. This is specified as magnetic paint C.

4. The Co-deposition type gamma-$Fe_2O_3$ magnetic powder employed in the magnetic paint C in Example 3 was replaced with Co-deposition type gamma-$Fe_2O_3$ magnetic powders having the specific surface area 20 m²/g and coercive forces of 41380 A/m, 49339 A/m and 57296 A/m (520 Oe, 620 Oe and 720 Oe) respectively (the other components being the same) and magnetic paints were obtained by the same process as in the magnetic paint A of Example 1. These are specified as magnetic paints D, E and F, respectively.

5. The Co-deposition type gamma-$Fe_2O_3$ magnetic powder employed in the magnetic paint C in Example 3 was replaced with Co-deposition type gamma-$Fe_2O_3$ magnetic powders having specific surface area 30 m²/g and coercive forces of 49339 A/m, 57296 A/m and 73211 A/m (620 Oe, 720 Oe and 920 Oe), respectively (the other components being the same) and magnetic paints were obtained by the same process as in the magnetic paint A of Example 1. These are specified as magnetic paints G, H and I, respectively.

6. The Co-deposition type gamma-$Fe_2O_3$ magnetic powder employed in the magnetic paint A in Example 1 is replaced by Co-deposition type gamma-$Fe_2O_3$ magnetic powders having specific surface area 40 m²/g and coercive forces of 49339 A/m, 57296 A/m and 73211 A/m (620 Oe, 720 Oe and 920 Oe)

respectively (the other components being the same) and magnetic paints are obtained by the same process as in the magnetic paint A. These are specified as magnetic paints J, K and L, respectively.

The characteristics of the magnetic paints A to L are indicated in the table below, in which P/B represents the ratio of the amount of magnetic powder P in weight to the amount of binder B in weight.

| Magnetic paint | Coercive force $H_c$ of magnetic powder | Specific surface area | P/B |
|---|---|---|---|
| A | 33423 A/m (420 Oe) | 20 m²/g | 4 |
| B | 33423 A/m (420 Oe) | 20 m²/g | 6 |
| C | 33423 A/m (420 Oe) | 20 m²/g | 8 |
| D | 41380 A/m (520 Oe) | 20 m²/g | 8 |
| E | 49339 A/m (620 Oe) | 20 m²/g | 8 |
| F | 57296 A/m (720 Oe) | 20 m²/g | 8 |
| G | 49339 A/m (620 Oe) | 30 m²/g | 8 |
| H | 57296 A/m (720 Oe) | 30 m²/g | 8 |
| I | 73211 A/m (920 Oe) | 30 m²/g | 8 |
| J | 49339 A/m (620 Oe) | 40 m²/g | 4 |
| K | 57296 A/m (720 Oe) | 40 m²/g | 4 |
| L | 73211 A/m (920 Oe) | 40 m²/g | 4 |

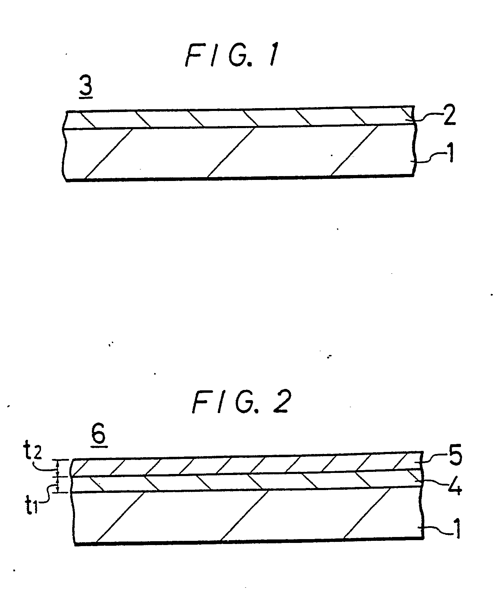

As shown in Figure 1, the magnetic paints A to L, are coated on a non-magnetic base 1 (for example, a polyethylene terephthalate film having a thickness of 12 μm), which is then subjected to a magnetic orientation treatment. After being dried, it is subjected to a super calender treatment to form a magnetic recording medium 3 having a single magnetic layer 2.

The same magnetic paints A to L are employed to form a first magnetic layer (under layer) 4 by the same process as described above as shown in Figure 2. After this first magnetic layer 4 (under layer) has been sufficiently hardened, a second magnetic layer (upper layer) 5 is formed by the same process as described above, to form a double-layer magnetic recording medium 6 according to the present invention.

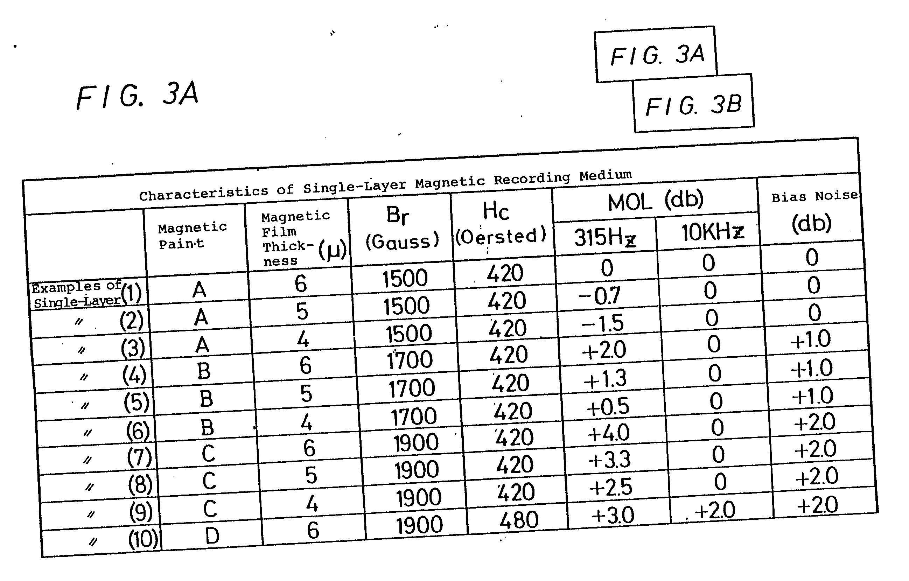

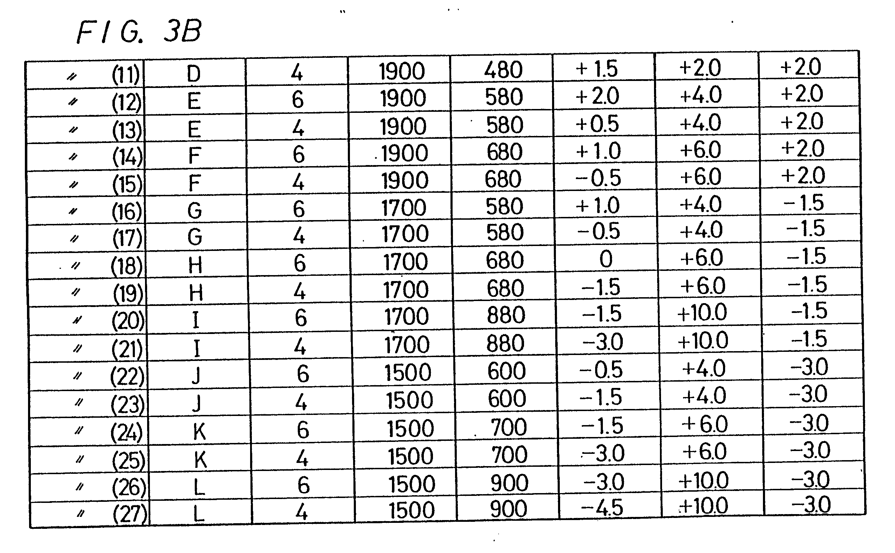

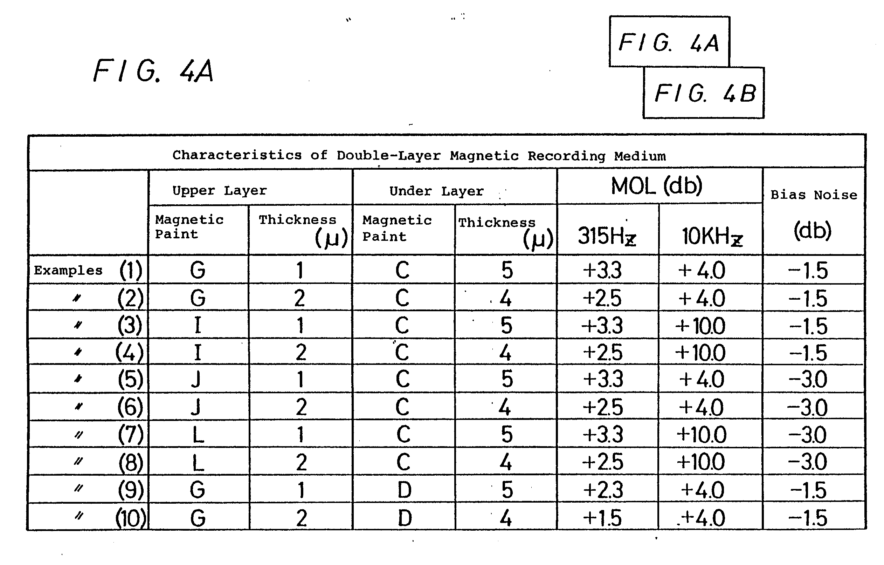

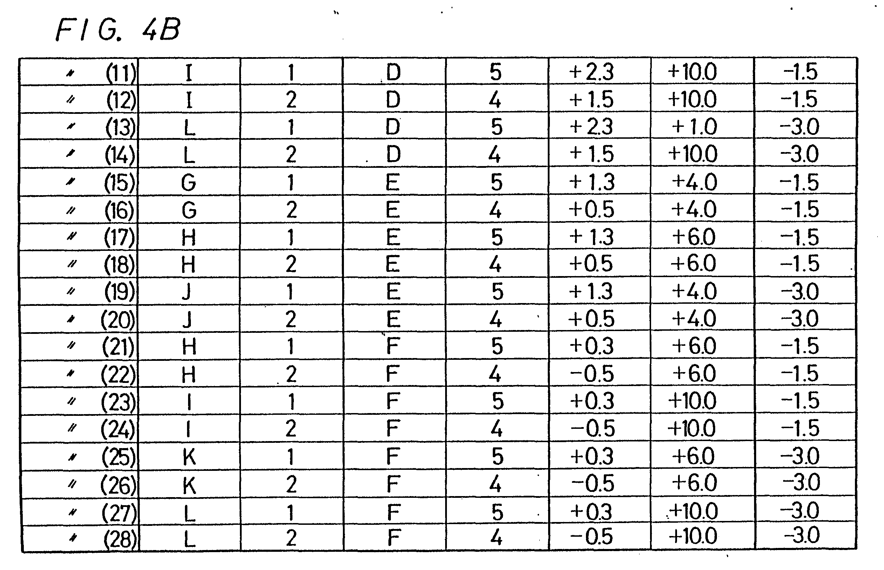

The magnetic characteristics (the residual magnetic flux density Br and the coercive force $H_c$), the maximum output levels of reproduced output (MOLs), and the bias noise of the magnetic recording media 3 and 6 formed as described above were measured. The results thereof are indicated in Figures 3 and 4.

Figure 3 indicates the characteristics of the magnetic recording medium 3 having the single magnetic layer 2 made of the respective magnetic paints A to L (single-layer Examples 1 to 27). Figure 4 indicates the characteristics of the double-layer magnetic recording medium 6 according to the present invention (Examples 1 to 28 according to this invention).

The magnetic recording medium (magnetic tape) used in the measurements was an audio tape approximately 3 mm (1/8-inch) wide. The measuring method for each characteristic was as follows.

1. The residual magnetic flux density Br is the residual magnetic flux density measured at an external magnetic field of 159155 A/m (2000 Oe) and the unit thereof is gauss.

2. The coercive force $H_c$ is the coercive force measured at an external magnetic field of 159155 A/m (2000 Oe), and the unit thereof is oersted (Oe).

3. The MOL (maximum output level: reproduced output) is measured at a reference frequency (315 Hz) and a high frequency (10 kHz). The former is the output level at which the output signal with the frequency of 315 Hz has a distortion of 3%, while the latter is the maximum saturation output level of a signal with the frequency of 10 kHz.

4. The bias noise is a noise when an auditory sense correction filter A (JIS) is utilized, and the unit thereof is decibel (db).

5. The tape speed is 4.8 cm/s.

The MOLs (315 Hz and 10 kHz) and the bias noise are indicated by a relative value (db) which takes the single-layer Example 1 in Figure 3 as a reference (0 db).

Figures 3 and 4 reveal that the double-layer magnetic recording medium 6 according to the present invention in which the specific surface area of the magnetic powder forming the second magnetic layer 5 forming the upper layer is larger than that of the first magnetic layer 4 forming the under layer produces a

4

high reproduced output over the whole of the low and high frequency ranges, and reduces the bias noise considerably as compared with the prior art single-layer magnetic recording medium 3.

The specific surface area of the Co-deposition type iron oxide magnetic powder forming the first magnetic layer 4 (the under layer) is preferably selected to be about 20 $m^2/g$ (18 to 25 $m^2/g$). If it is out of this range, the low frequency reproduced output is lowered. The specific surface area of the Co-deposition type iron oxide magnetic powder forming the second magnetic layer 5 (the upper layer) is selected to be 28 $m^2/g$ or above, more preferably in a range from 28 to 45 $m^2/g$. If it is out of this range, the bias noise cannot be reduced. The coercive force $H_{C1}$ and the residual magnetic flux density $Br_1$ of the first magnetic layer 4 are selected in a range from 31831 to 55704 A/m (400 to 700 oersteds) and 0.16 to 0.2 tesla (1600 to 2000 gauss), respectively. If the $Br_1$ is out of the range 0.16 to 0.2 tesla (1600 to 2000 gauss), the output of the low frequency band is lowered. The coercive force $H_{C2}$ of the second magnetic layer 5 is preferably selected in a range from 43768 to 71620 A/m (550 to 900 oersteds). If it is out of this range, the output in the high frequency band is not increased, and the recording bias and erasing are restricted by a recording and reproducing apparatus.

It is preferable that the coercive force $H_{C1}$ of the first magnetic layer 4 is less than the coercive force $H_{C2}$ of the second magnetic layer 5. Also it is preferable that the thickness of the first magnetic layer 4 is more than 2.0 µm but less than 6.0 µm. If the thickness is less than 2.0 µm, the reproduced output in the low frequency band is decreased. If it is more than 6.0 µm, the reproduced output in the low frequency band only is increased excessively to make the balance between the low and high frequency bands poor. Moreover, the thickness of the second magnetic layer 5 is preferably selected in a range from 0.2 to 2.0 µm. If the thickness thereof is less than 0.2 µm, the bias noise cannot be reduced. If it exceeds 2.0 µm, the reproduced output in the low frequency band is decreased.

As described above, on the basis of the results of the characteristics in Figure 4, there is provided the magnetic recording medium 6 having the first and second magnetic layers 4 and 5 formed on the non-magnetic base 1 in turn as shown in Figure 2, in which the first magnetic layer 4 is formed by coating the Co-deposition type iron oxide magnetic powder the specific surface area of which is in a range from 18 to 25 $m^2/g$ measured according to the BET adsorption method, the coercive force $H_{C1}$ thereof is in a range from 31831 to 55704 A/m (400 to 700 oersteds), and the residual magnetic flux density Br thereof is in a range from 0.16 to 0.2 tesla (1600 to 2000 gauss), and in which the second magnetic layer 5 is formed by coating the Co-deposition type iron oxide magnetic powder the specific surface area measured according to the BET adsorption method of which is 28 $m^2/g$ or above, more preferably, in a range from 28 to 45 $m^2/g$, and the coercive force $H_{C2}$ thereof is in a range from 43768 to 71620 A/m (550 to 900 oersteds).

## Claims

1. A magnetic recording medium having a non-magnetic base, a first magnetic layer formed on said base and a second magnetic layer formed on said first magnetic layer, characterised in that said first magnetic layer is formed by coating binder containing a Co compound-deposition type iron oxide magnetic powder or a Co and Fe compound-deposition type iron oxide magnetic powder the specific surface area of which powder measured according to a BET adsorption method is in a range from 18 to 25 $m^2/g$, and the coercive force $H_{C1}$ of which layer is in a range from 31831 to 55704 A/m (400 to 700 oersteds), and the residual magnetic flux density Br of which layer is in a range from 0.16 to 0.2 tesla (1600 to 2000 gauss), and in that said second magnetic layer is formed by coating binder containing a Co compound-deposition type iron oxide magnetic powder or a Co and Fe compound-deposition type iron oxide magnetic powder the specific surface area of which powder measured according to the BET absorption method is 28 $m^2/g$ or above, and the coercive force $H_{C2}$ of which layer is in a range from 43768 to 71620 A/m (550 to 900 oersteds).

2. A magnetic recording medium according to claim 1 wherein the specific surface area of the magnetic powder of said second magnetic layer measured according to the BET adsorption method is in a range from 28 to 45 $m^2/g$.

3. A magnetic recording medium according to claim 1 or claim 2 wherein $H_{C1}$ is less than $H_{C2}$.

4. A magnetic recording medium according to claim 1, claim 2 or claim 3 wherein the thickness of said first magnetic layer is in a range from 2.0 to 6.0 µm.

5. A magnetic recording medium according to any one of the preceding claims wherein the thickness of said second magnetic layer is in a range from 0.2 to 2.0 µm.

## Patentansprüche

1. Magnetisches Aufzeichnungsmedium, mit einer nichtmagnetischen Basis, einer auf der Basis ausgebildeten ersten magnetischen Schicht und einer auf der ersten magnetischen Schicht ausgebildeten zweiten magnetischen Schicht, dadurch gekennzeichnet, daß die erste magnetische Schicht durch Beschichten mit einem Bindemittel gebildet ist, das ein Co-Gemischabscheidungseisenoxid-Magnetpulver oder ein Co- und Fe-Gemischabscheidungseisenoxid-Magnetpulver enthält, wobei die spezifische Oberfläche des Pulvers, die gemäß einem BET-Adsorptionsverfahren gemessen ist, in einem Bereich von 18 bis 25 $m^2/g$ und die Koerzitivkraft $H_{C1}$ dieser Schicht in einem Bereich von 31831 bis 55704 A/m (400 bis 700 Oersted) liegen und die Restmagnetflußdichte Br dieser Schicht in einem Bereich von 0,16 bis 0,2 Tesla (1600 bis 2000 Gauß) liegt, und daß die zweite magnetische Schicht durch Beschichten mit einem Bindemittel gebildet ist, das ein Co-Gemischabscheidungseisenoxid-Magnetpulver oder ein Co- und Fe-Gemischabscheidungseisenoxid-Magnetpulver enthält, wobei die spezifische Oberfläche dieses Pulvers, die gemäß dem BET-Adsorptionsverfahren gemessen ist, mindestens 28 m$^2$/g beträgt und die Koerzitivkraft $H_{C2}$ dieser Schicht in einem Bereich von 43768 bis 71620 A/m (550 bis 900 Oersted) liegt.

2. Magnetisches Aufzeichnungsmedium nach Anspruch 1, bei dem der spezifische Oberflächeninhalt des Magnetpulvers der zweiten magnetischen Schicht, die gemäß dem BET-Adsorptionsverfahren gemessen ist, in einem Bereich von 28 bis 45 m$^2$/g liegt.

3. Magnetisches Aufzeichnungsmedium nach Anspruch 1 oder 2, bei dem $H_{C1}$ kleiner als $H_{C2}$ ist.

4. Magnetisches Aufzeichnungsmedium nach Anspruch 1, 2 oder 3, bei dem die Dicke der ersten magnetischen Schicht in einem Bereich von 2,0 bis 6,0 µm liegt.

5. Magnetisches Aufzeichnungsmedium nach einem der vorhergehenden Ansprüche, bei dem die Dicke der zweiten magnetischen Schicht in einem Bereich von 0,2 bis 2,0 µm liegt.

**Revendications**

1. Support d'enregistrement magnétique possédant une base non magnétique, une première couche magnétique formée sur ladite base, et une deuxième couche magnétique formée sur ladite première couche magnétique, caractérisé en ce que ladite première couche magnétique est formée par dépôt d'un agent liant contenant une poudre magnétique d'oxyde de fer du type à dépôt d'un composé de Co ou une poudre magnétique d'oxyde de fer du type à dépôt d'un composé de Co et Fe, l'aire superficielle massique de la poudre, mesurée suivant la méthode d'adsorption BET, se situant dans un intervalle de 18 à 25 m$^2$/g, la force coercitive $H_{C1}$ de la couche se situant dans un intervalle de 31831 à 55704 A/m (de 400 à 700 Oe), et la densité de flux magnétique résiduelle Br de la couche se situant dans un intervalle de 0,16 à 0,2 T (de 1600 à 2000 G), et en ce que ladite deuxième couche magnétique est formée par dépôt d'un agent liant contenant une poudre magnétique d'oxyde de fer du type à dépôt d'un composé de Co ou une poudre magnétique d'oxyde de fer du type à dépôt d'un composé de Co et Fe, l'aire superficielle massique de cette poudre, mesurée suivant la méthode d'absorption BET, étant 28 m$^2$/g ou plus, et la force coercitive $H_{C2}$ de cette couche se situant dans un intervalle de 43768 à 71620 A/m (de 550 à 900 Oe).

2. Support d'enregistrement magnétique selon la revendication 1, où l'aire superficielle massique de la poudre magnétique de ladite deuxième couche magnétique mesurée suivant le procédé d'adsorption BET se trouve dans un intervalle de 28 à 45 m$^2$/g.

3. Support d'enregistrement magnétique selon la revendication 1 ou 2, où $H_{C1}$ est inférieur à $H_{C2}$.

4. Support d'enregistrement magnétique selon la revendication 1, 2 ou 3, où l'épaisseur de ladite première couche magnétique se trouve dans un intervalle de 2,0 à 6,0 µm.

5. Support d'enregistrement magnétique selon l'une quelconque des revendications précédentes, où l'épaisseur de ladite deuxième couche magnétique est dans un intervalle de 0,2 à 2,0 µm.

# FIG. 1

# FIG. 2

# FIG. 3A

FIG. 3A
FIG. 3B

| Characteristics of Single-Layer Magnetic Recording Medium | | | | | MOL (db) | | Bias Noise |
|---|---|---|---|---|---|---|---|
| | Magnetic Paint | Magnetic Film Thickness ($\mu$) | Br (Gauss) | Hc (Oersted) | 315Hz | 10KHz | (db) |
| Examples of Single-Layer (1) | A | 6 | 1500 | 420 | 0 | 0 | 0 |
| " (2) | A | 5 | 1500 | 420 | −0.7 | 0 | 0 |
| " (3) | A | 4 | 1500 | 420 | −1.5 | 0 | 0 |
| " (4) | B | 6 | 1700 | 420 | +2.0 | 0 | +1.0 |
| " (5) | B | 5 | 1700 | 420 | +1.3 | 0 | +1.0 |
| " (6) | B | 4 | 1700 | 420 | +0.5 | 0 | +1.0 |
| " (7) | C | 6 | 1900 | 420 | +4.0 | 0 | +2.0 |
| " (8) | C | 5 | 1900 | 420 | +3.3 | 0 | +2.0 |
| " (9) | C | 4 | 1900 | 420 | +2.5 | 0 | +2.0 |
| " (10) | D | 6 | 1900 | 480 | +3.0 | +2.0 | +2.0 |

0 090 052

## FIG. 3B

| | | | | | | | | |
|---|---|---|---|---|---|---|---|---|
| 〃 | (11) | D | 4 | 1900 | 480 | +1.5 | +2.0 | +2.0 |
| 〃 | (12) | E | 6 | 1900 | 580 | +2.0 | +4.0 | +2.0 |
| 〃 | (13) | E | 4 | 1900 | 580 | +0.5 | +4.0 | +2.0 |
| 〃 | (14) | F | 6 | 1900 | 680 | +1.0 | +6.0 | +2.0 |
| 〃 | (15) | F | 4 | 1900 | 680 | −0.5 | +6.0 | +2.0 |
| 〃 | (16) | G | 6 | 1700 | 580 | +1.0 | +4.0 | −1.5 |
| 〃 | (17) | G | 4 | 1700 | 580 | −0.5 | +4.0 | −1.5 |
| 〃 | (18) | H | 6 | 1700 | 680 | 0 | +6.0 | −1.5 |
| 〃 | (19) | H | 4 | 1700 | 680 | −1.5 | +6.0 | −1.5 |
| 〃 | (20) | I | 6 | 1700 | 880 | −1.5 | +10.0 | −1.5 |
| 〃 | (21) | I | 4 | 1700 | 880 | −3.0 | +10.0 | −1.5 |
| 〃 | (22) | J | 6 | 1500 | 600 | −0.5 | +4.0 | −3.0 |
| 〃 | (23) | J | 4 | 1500 | 600 | −1.5 | +4.0 | −3.0 |
| 〃 | (24) | K | 6 | 1500 | 700 | −1.5 | +6.0 | −3.0 |
| 〃 | (25) | K | 4 | 1500 | 700 | −3.0 | +6.0 | −3.0 |
| 〃 | (26) | L | 6 | 1500 | 900 | −3.0 | +10.0 | −3.0 |
| 〃 | (27) | L | 4 | 1500 | 900 | −4.5 | +10.0 | −3.0 |

0 090 052

FIG. 4A

FIG. 4A

FIG. 4B

| Characteristics of Double-Layer Magnetic Recording Medium | | | | | | | |
|---|---|---|---|---|---|---|---|
| | Upper Layer | | Under Layer | | MOL (db) | | Bias Noise |
| | Magnetic Paint | Thickness $(\mu)$ | Magnetic Paint | Thickness $(\mu)$ | 315Hz | 10KHz | (db) |
| Examples (1) | G | 1 | C | 5 | +3.3 | +4.0 | −1.5 |
| ″ (2) | G | 2 | C | 4 | +2.5 | +4.0 | −1.5 |
| ″ (3) | I | 1 | C | 5 | +3.3 | +10.0 | −1.5 |
| ″ (4) | I | 2 | C | 4 | +2.5 | +10.0 | −1.5 |
| ″ (5) | J | 1 | C | 5 | +3.3 | +4.0 | −3.0 |
| ″ (6) | J | 2 | C | 4 | +2.5 | +4.0 | −3.0 |
| ″ (7) | L | 1 | C | 5 | +3.3 | +10.0 | −3.0 |
| ″ (8) | L | 2 | C | 4 | +2.5 | +10.0 | −3.0 |
| ″ (9) | G | 1 | D | 5 | +2.3 | +4.0 | −1.5 |
| ″ (10) | G | 2 | D | 4 | +1.5 | +4.0 | −1.5 |

0 090 052

## FIG. 4B

| | | | | | | | |
|---|---|---|---|---|---|---|---|
| 〃 (11) | I | 1 | D | 5 | +2.3 | +10.0 | −1.5 |
| 〃 (12) | I | 2 | D | 4 | +1.5 | +10.0 | −1.5 |
| 〃 (13) | L | 1 | D | 5 | +2.3 | +1.0 | −3.0 |
| 〃 (14) | L | 2 | D | 4 | +1.5 | +10.0 | −3.0 |
| 〃 (15) | G | 1 | E | 5 | +1.3 | +4.0 | −1.5 |
| 〃 (16) | G | 2 | E | 4 | +0.5 | +4.0 | −1.5 |
| 〃 (17) | H | 1 | E | 5 | +1.3 | +6.0 | −1.5 |
| 〃 (18) | H | 2 | E | 4 | +0.5 | +6.0 | −1.5 |
| 〃 (19) | J | 1 | E | 5 | +1.3 | +4.0 | −3.0 |
| 〃 (20) | J | 2 | E | 4 | +0.5 | +4.0 | −3.0 |
| 〃 (21) | H | 1 | F | 5 | +0.3 | +6.0 | −1.5 |
| 〃 (22) | H | 2 | F | 4 | −0.5 | +6.0 | −1.5 |
| 〃 (23) | I | 1 | F | 5 | +0.3 | +10.0 | −1.5 |
| 〃 (24) | I | 2 | F | 4 | −0.5 | +10.0 | −1.5 |
| 〃 (25) | K | 1 | F | 5 | +0.3 | +6.0 | −3.0 |
| 〃 (26) | K | 2 | F | 4 | −0.5 | +6.0 | −3.0 |
| 〃 (27) | L | 1 | F | 5 | +0.3 | +10.0 | −3.0 |
| 〃 (28) | L | 2 | F | 4 | −0.5 | +10.0 | −3.0 |

0 090 052